# EUROPEAN PATENT SPECIFICATION

(11) **EP 1 954 963 B1**
(45) Date of publication and mention of the grant of the patent: **25.08.2010**
(21) Application number: 05823895.7
(22) Date of filing: 18.11.2005
(51) Int. Cl.: F16H 55/36

(54) **PULLEY UNIT**
RIEMENSCHEIBENEINHEIT
UNITE DE POULIE

(43) Date of publication of application: 13.08.2008
(73) Proprietor: DAYCO EUROPE S.r.l., Chieti (IT)
(72) Inventor: RIU, Hervé, F-38140 La Murette (FR)
(74) Representative: Franzolin, Luigi
(86) International application number: PCT/IT2005/000675
(87) International publication number: WO 2007/057932

(56) References cited:
- EP-A- 1 279 807
- WO-A-03/104673
- DE-A1- 10 235 285
- DE-C1- 19 636 628
- US-A- 4 317 388
- US-A1- 2003 098 213
- PATENT ABSTRACTS OF JAPAN vol. 1995, no. 09, 31 October 1995 (1995-10-31) -& JP 07 158664 A (FUMITO KOMATSU), 20 June 1995 (1995-06-20)

## Description

### TECHNICAL FIELD

The present invention relates to a pulley unit, particularly for a drive belt adapted to connect a plurality of accessory members to a crankshaft of an internal combustion engine.

### BACKGROUND ART

There are known pulley units comprising a hub adapted to be rigidly connected to a driving member, for example a crankshaft of an internal combustion engine, a pulley coaxial to the hub and adapted to cooperate with a drive belt, and a first elastically deformable connecting element interposed between the hub and the pulley, operating as an elastic coupling for the purpose of filtering the transmission of torsional oscillations between the hub and the pulley.

Pulley units of the type briefly described are used in the automotive field for belt driving auxiliary engine members such as, for example, the alternator, the coolant pump or a power steering pump, the compressor of an air conditioning system.

Such known units, generally, further comprise an integrated torsional damper, which consists of an annular element coaxial to the hub, or inertia ring, and a second elastic connecting element interposed between the hub and the inertia ring. The moment of inertia of the inertia ring and the elastic feature of the second elastic connecting element are calibrated so as to create a "mass-spring" system adapted to correct the natural dynamic behaviour of the crankshaft, and in particular to attenuate the oscillation peak corresponding to the first natural frequency of torsional vibration, allowing operation without reaching critical resonance conditions.

The elastic coupling between the hub and the pulley is needed to filter the transmission of torsional oscillations of the crankshaft to the accessories, and to absorb instantaneous revolution speed differences in particular operating conditions, such as, for example, cranking and sudden decelerations of the engine, during which the pulley tends to project from the hub due to the high inertias of the driven members, in particular of the alternator.

According to a first known embodiment, the elastic coupling consists of a ring of elastomeric material arranged radially or axially between the hub and the pulley, and fastened to both, for example by vulcanisation. For the purpose of effectively exerting the abovementioned "filter" function, the elastomeric material must have a low rigidity. The component is therefore critical both from a mechanical point of view, because the high deformability of the material contrasts with the high mechanical resistance requirements which must be respected to transmit the required torques and, above all, from the thermal point of view. Under this profile, indeed, it is impossible to confer to the material high temperature resistance features.

In the attempt to solve the abovementioned problems, solutions in which the elastic coupling consists of one or more springs in replacement of the elastomeric material ring have been proposed.

EP-A-1 279 807 which document discloses the features of the preamble of claim 1, illustrates a pulley unit in which the hub is coupled to the pulley by means of at least one spiral spring constrained so as to work in compression when the hub drives the pulley; in particular, the inner turn of the spring is essentially fittingly constrained on the hub, by bending and inserting one of its ends in a specific seat of the hub itself; the outer turn of the spring is instead frictionally coupled with the pulley. In this way, during normal operation in which the hub drives the pulley (positive torque), the spring tends to expand against the pulley and to transmit the torque by friction; when instead the pulley tends to turn faster than the hub due to the inertia of the driven accessories (negative torque), as occurs for example in engine cranking transients in which the crankshaft rotation is irregular or in sudden accelerations, a relative slip between pulley and spring, and therefore a decoupling of the pulley from the hub, may be produced.

The use of one or more spiral springs with the function of elastic coupling allows to eliminate the drawbacks related to the use, for the same purpose, of an elastomeric element. However, the arrangement of the constraint of the spring to the hub and to the pulley cause further problems.

In particular, the forced-fitted connection between one end of the spring bent to form a hook and a respective seat of the hub determines an undesired stress concentration both in the bending zone of the spring and on the bottom of seat, and therefore creates design constraints in applications where reduced size and high transmitted torques are required at the same time.

Furthermore, the coupling interference between the end of the spring and the respective seat is difficult to control due to the spring manufacturing tolerances.

It is a further problem to control the radial interference between the outer turn of the spring and the pulley, so as to avoid undesired slippings when the transmitted torque is positive, but to ensure the decoupling when the torque reaches predetermined negative values. For this purpose, it has been proposed to create inside the pulley stops which prevent the slipping under positive torques, but this considerably increases the manufacturing costs of the pulley and may determine, in use, undesired stress on the spring and noise.

Another problem consists in the fact that the outer surface of the spring, seen in section, is concave due to the manufacturing process. Therefore, to obtain a correct coupling between such surface and the joined surface, additional mechanical machining on the pulley is needed.

Finally, since the material of the spring is normally harder than that of the pulley, surface hardening treatments are needed on the latter to prevent early wear.

### DISCLOSURE OF THE INVENTION

It is the object of the present invention to obtain a pulley unit which is free from the abovementioned drawbacks related to the known units.

The aforesaid object is achieved by the present invention in that it relates to a pulley unit according to claim 1.

### BRIEF DESCRIPTION OF THE DRAWINGS

For a better understanding of the present invention, a preferred embodiment will now be described by way of non-limitative example, and with reference to the accompanying drawing, in which:
figure 1 is a partial axial section of a pulley unit according to the present invention;
figure 2 is a section of some parts of the pulley unit in figure 1 taken along the line II-II in figure 1;
figures 3, 4 and 5 are sections taken respectively along the lines III-III, IV-IV and V-V of figure 2, in a magnified scale.

### BEST MODE FOR CARRYING OUT THE INVENTION

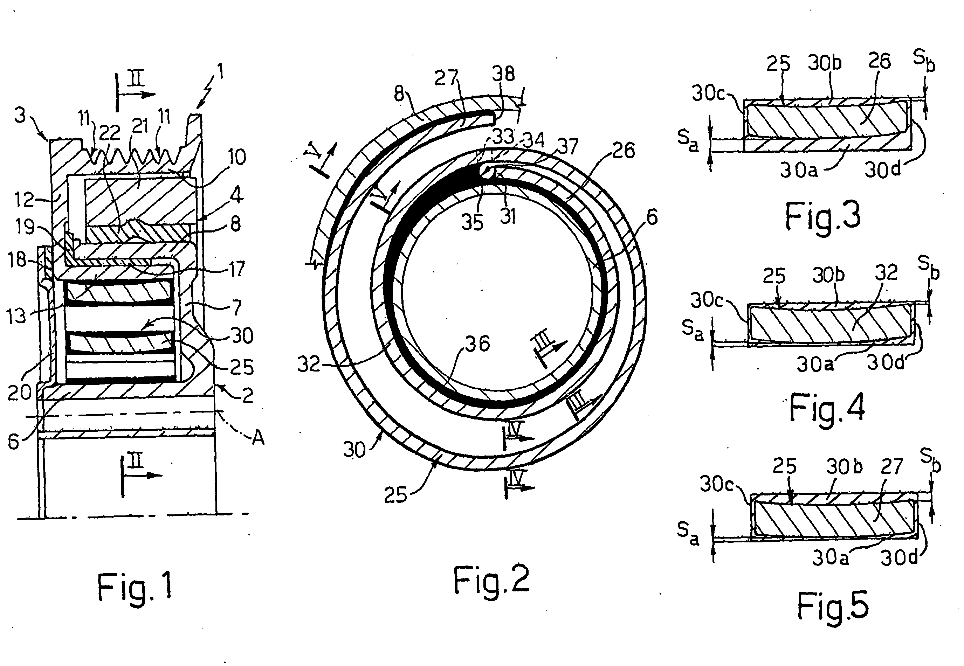

With reference to figure 1, numeral 1 indicates as a whole a pulley unit according to the present invention. The pulley unit 1 essentially comprises a mounting element 2 of axis A adapted to be rigidly fastened to a crankshaft (not shown) of an internal combustion engine, a pulley 3 coaxial to the mounting element 2, and a dynamic damper 4 connected to the mounting element itself.

The mounting element 2, conveniently made of aluminium or sintered, constitutes the driving member of the pulley unit 1 and integrally comprises a cylindrical hub 6, a flange 7 extending radially towards an axial end of the hub 6 and an outer cylindrical wall 8 coaxial to the hub 6.

The pulley 3, conveniently of the multiple groove or poly-V type, is conveniently made of sheet metal by means of subsequent pressing and rolling operations or flow-forming and integrally comprises an essentially cylindrical crown 10, defining on its own outer surface a plurality of grooves 11, a flat annular wall 12 integrally extending inwards from an axial end of the crown 10 facing opposite to the flange 7 of the mounting element 2, and an inner cylindrical wall 13 coaxial to the crown 10 and arranged inside the outer cylindrical wall 8 of the mounting element 2.

The pulley 3 is radially supported with respect to the mounting element 2 by a bushing 17, conveniently made of anti-friction material, radially arranged between the cylindrical inner wall 13 of the pulley 3 and the cylindrical wall 8 of the mounting element 2.

The pulley 3 is also axially supported by a pair of rings 18, 19, also conveniently of anti-friction material, arranged one between the wall 12 of the pulley 3 and a disc cover 20 fastened to the hub 6, and the other between the wall 12 itself and an end surface of the wall 8 of the mounting element 2. Conveniently, the ring 19 is integral with the bushing 17 and forms an end shoulder thereof.

The dynamic damper 4 comprises an inertia ring 21 and an elastic ring 22 of elastomeric material for connecting the inertia ring 21 to the mounting element 2. More particularly, the inertia ring 21 is fitted inside the crown 10 of the pulley 3 with a radial clearance and is elastically connected to the wall 8 of the mounting element 2 by means of the elastic ring 22, in a known way, conveniently by force-fitting.

The pulley 3 is constrained to the hub 6 by means of a spiral spring 25, with essentially rectangular section elongated in axial direction, having an inner end portion 26 cooperating with an outer surface of the hub 6 and an outer end portion 27 cooperating with an inner surface of the wall 13 of the pulley 3. The spring is essentially formed by two complete turns (figure 2); the inner end portion 26 extends by approximately half (180°) of the inner turn, and the outer end portion 27 of the spring 25 extends by approximately one fourth (90°) of the outer turn.

Here, the expression "essentially rectangular" is used with reference to the section of the spring 25, because the normal production processes of the rectangular section spiral springs determine an anticlastic curvature so that, in cross section, the outer surface of the spring is actually slightly concave and the inner surface is slightly convex as schematically shown and exaggerated in figures 1 and 3-5.

According to the present invention, the spring 25 is provided with a polymeric material coating 30 which covers at least said end portions 26, 27 of the spring 25 and defines with the hub 6 and with the pulley 3 respective friction couplings.

Preferably, according to the embodiment shown, the coating 30 is of elastomeric material, particularly rubber.

According to a preferred embodiment of the invention, the coating 30 fully covers the spring 25, so as to also perform an anti-corrosion function, and has a rectangular outer profile in every section of the spring 25, and in particular in the end portions 26, 27.

The coating 30 comprises a layer 30a which coats the inner face of the spring 25, a layer 30b which coats the outer face of the spring 25 and side layers 30c, 30d which coat the sides of the spring 25.

The layers 30a, 30b of the coating 30 present variable thickness in transversal direction to compensate for the anticlastic curvature of the spring 25 and to form respective straight generating line outer surfaces. Conveniently, the layers 30a, 30b have variable thicknesses also along the length of the spring 25, as shown in the figures from 3 to 5 and described below.

For clarity and univocal comparison purposes, it is to be noted that the word "thickness" as used in the following description and in the claims must be understood as "minimum thickness" of the layer in a certain section, that is the distance between the generating line delimiting the section of the concerned layer outwards and the cross-section of the spring 25.

In particular, along the inner end portion 26 (figure 3), the inner layer 30a intended to come into contact with the hub 6 has a thickness sₐ greater than the thickness s_{b} of the outer layer 30b. Along the entire inner end portion of the spring 25, the layers 30a and 30b have constant thickness sₐ, _{Sb}.

From the aforesaid inner end portion 26 and for a subsequent portion 32 of the first turn ending in a cross-section 33 which closely precedes the starting section of the second turn which radially overlaps the inner free end 31, the coating 30 has a progressively increasing thickness on the inner side so as to maintain its inner diameter constant.

As clearly shown in figure 2, in the end section of the first turn of the spring 25 comprised between the aforesaid sections 33 and 34, the inner layer 30a forks out and forms an appendix 35 which joins to the coating 30 of the inner free end 31, thus forming a closed ring 36 which internally coats the entire first turn and is fitted on the hub 6 with appropriate radial interference.

From section 34 onwards, the inner layer 30a of the coating 30 continues with minimum thickness along the entire second turn; the transition zone of the thickness of the inner layer 30a forms a concave circular profile joint 37 aimed at withstanding the torsions of the spring 25 which tend to unwind it.

The outer layer 30b presents a minimum and constant thickness along the entire spring 25 except for the outer end portion 27.

Along such portion, the thickness of the outer layer 30b increases progressively up to the outer free end 38 of the spring 25 (figures 2 and 5).

The spring 25 therefore cooperates with the hub 6 through the inner layer 30a, and with the wall 13 of the pulley 3 through the portion of the outer layer 30b which coats the end portion 27 of the spring 25.

The winding direction of spring 25 is such to be subjected to a flexion/compression stress when the hub 6 drives the pulley 3, and to a flexion/traction stress when the pulley 3 drives the hub 6.

The operation of the pulley unit 1 is as follows. The mounting element 2 of the pulley unit 1 is in use fastened to the crankshaft of the engine and turns rigidly with it.

The pulley 3 is elastically connected to the hub 6 of the mounting element 2 via the spring 25. The torque is transmitted between the hub 6 and the pulley 3 via the spring 25, which essentially forms an elastic coupling; by appropriately dimensioning the torsional rigidity of the spring 25, it is possible to "filter" the torsional oscillations between the hub 6 and the pulley 3.

The behaviour of the elastic coupling is asymmetric in the two directions of torque transmission. For positive torques, that is when the pulley 3 is driven by the hub 6, the behaviour is essentially linear, i.e. the relative rotation between the hub 6 and the pulley 3 is proportional to the transmitted torque. At higher torque values, rigidity tends to increase, but with no slippage: indeed, when torque increases, the spring 25 tends to "unwind" and therefore to increase the winding arcs, as well as the contact pressure, both on the hub 6 and against the wall 13 of the pulley 3. The coatings 30a, 30b ensure the maintenance of the grip conditions.

For negative torques, the behaviour of the coupling is linear until the maximum transmission torque is reached which is defined by the slippage of the outer end portion 27 of the spring 25 with respect to the wall 13 of the pulley; the maximum transmissible torque may be essentially lower, in absolute value, of the positive transmitted torque values transmitted because the spring 25 tends to contract radially and consequently both the amplitude of the engagement arc between the outer end portion 27 and the wall 13 through the coating 30b, and the contact pressure are reduced.

The dynamic damper 4 alters the vibration behaviour of the crankshaft in a manner per se known; in particular, choosing the inertia of the inertia ring 21 so as to create a resonant system at a frequency close to the first natural frequency of torsional oscillation of the crankshaft, considered without the damper 4, the amplitude of oscillations of the crankshaft corresponding to such frequency can be attenuated.

From an analysis of the features of the pulley unit 1 achieved according to the present invention, there are apparent the advantages that it allows to obtain.

The use of the coating 30, at least to cover the surface of the spring 25 intended to come into contact with the hub 6 and with the pulley 3, allows to eliminate the fastening elements of the inner spring turn 25 to the hub 6 and the consequent tension concentrations, as well as to optimise the radial interference between the outer turn of the spring and the pulley, so as to avoid undesired slipping when the transmitted torque is positive but to ensure the decoupling when the torque reaches predetermined negative values. It is therefore possible to eliminate any stop element for the spring 25 on the pulley 3 and therefore to reduce the manufacturing costs of the pulley, the risks of undesired stress of the spring and the noise.

Since the direct contact between the spring 25 and the pulley 3 is avoided, no re-machining, nor particular surface hardening treatments are required on the pulley 3.

It is finally apparent that changes and variations can be implemented to the unit 1 made according to the present invention without departing from the scope of protection as defined by the claims.

In particular, the spring 25 could be arranged between the inertia ring 21 and the pulley 3, rather than between the hub 6 and the pulley 3. The inertia ring 21 would form in this case the driving member of the elastic coupling defined by the ring itself.

Instead of a single spring, a plurality of reciprocally parallel springs may be used.

The coating 30 may be made of non-elastomeric polymeric material, for example a thermoplastic material with self-lubricating properties, or an elastomeric thermoplastic material, for example a block copolymer.

By appropriately dimensioning the elastomeric ring 36 defined by the part of the layer 30a which internally coats the inner turn of the spring 25, a mass/spring system adapted to behave as a dynamic damper, additional or alternative to the described dynamic damper 4, may be defined.

## Claims

1. A pulley unit for a belt drive, particularly for an internal combustion engine, comprising a driving member (2) rotatable about its axis, a pulley (3) coaxial to the driving member (2) and provided with a crown (11) adapted to cooperate with a belt, and at least one spiral spring (25) arranged between said driving member (2) and said pulley (3) to rotationally couple said pulley (3) to said driving member (2), **characterised in that** said spring (25) has a polymeric material coating (30) at least on one first end portion (36, 39) tHereof anchored to said driving member (2) and on a second end portion (27) thereof constrained to said pulley (3), said coating (30) of said spring (25) defining with said driving member (2) and with said pulley (3) respective friction couplings.

2. A pulley unit according to claim 1, **characterised in that** said coating (30) is made of elastomeric material.

3. A pulley unit according to claim 1 or 2, **characterised in that** said coating (30) completely covers said spring (25).

4. A unit according to claim 3, **characterised in that** said coating (30) presents a higher thickness at regions contacting said driving member (2) and said pulley (3).

5. A pulley unit according to one of the preceding claims, **characterised in that** said coating (30) forms a continuous ring (36) which internally coats an inner turn of said spring (25) and is fitted on said driving member (2).

6. A pulley unit according to any one of the preceding claims, **characterised in that** said coating (30) presents straight generatrices.

7. A pulley unit according to claim 6, **characterised in that** said coating (30) presents rectangular cross-section

8. A unit according to any of the preceding claims, **characterised in that** said spring (25) is subject to a flexion/compression stress in the direction of transmission of the torque in which the driving member (2) drives the pulley (3).

9. A unit according to claim 8, **characterised in that** said friction coupling between the coating (30) on said outer end portion (37) of said spring (35) and said pulley (3) defines a maximum transmissible torque value in a direction of transmission of the torque in which the pulley (3) tends to drive the driving member (2).

10. A unit according to any of the preceding claims, **characterised by** comprising a plurality of spiral springs (25) constrained to said driving member (2) and to said pulley (3) in parallel to each other.

11. A unit according to any of the preceding claims, **characterised by** comprising a supporting member (2) adapted to be fastened to a rotating member, and a dynamic vibration damper (4) comprising an inertia ring (21) and an elastomeric material ring (22) which connects said inertia ring (21) to said supporting member (2).

12. A unit according to claim 11, **characterised in that** said driving member consists of said supporting member (2).

13. A unit according to claim 11, **characterised in that** said driving member consists of said inertia ring (21).

## Patentansprüche

1. Eine Riemenscheibeneinheit für einen Riemenantrieb, insbesondere für eine Brennkraftmaschine, die aufweist: ein Antriebselement (2), das um seine Achse drehbar ist, eine Riemenscheibe (3), die mit dem Antriebselement (2) koaxial verläuft und mit einem Kranz (11) versehen ist, der angepasst ist, mit einem Riemen zusammenzuwirken, und zumindest eine Spiralfeder (25), die zwischen dem Antriebselement (2) und der Riemenscheibe (3) vorgesehen ist, um die Riemenscheibe (3) mit dem Antriebselement (2) bezüglich Rotation zu koppeln, **dadurch gekennzeichnet, dass** die Feder (25) eine Polymer-Material-Beschichtung (30) an ihrem zumindest einen ersten Endabschnitt (36, 39), der an dem Antriebselement (2) befestigt ist, und an ihrem zweiten Endabschnitt (27), der auf die Riemenscheibe (3) beschränkt ist, hat, wobei die Beschichtung (30) der Feder (25) mit dem Antriebselement (2) und der Riemenscheibe (3) jeweilige Reibkopplungen definiert.

2. Eine Riemenscheibeneinheit nach Anspruch 1, **dadurch gekennzeichnet, dass** die Beschichtung (30) aus elastomerem Material gefertigt ist.

3. Eine Riemenscheibeneinheit nach Anspruch 1 oder 2, **dadurch gekennzeichnet, dass** die Beschichtung (30) die Feder (25) vollständig bedeckt.

4. Eine Einheit nach Anspruch 3, **dadurch gekennzeichnet, dass** die Beschichtung (30) eine höhere Dicke an Bereichen aufweist, die das Antriebselement (2) und die Riemenscheibe (3) berühren.

5. Eine Riemenscheibeneinheit nach einem der vorhergehenden Ansprüche, **dadurch gekennzeichnet, dass** die Beschichtung (30) einen kontinuierlichen Ring (36) bildet, der eine Innenwindung der Feder (25) innen bedeckt und der auf das Antriebselement (2) gepasst ist.

6. Eine Riemenscheibe nach einem der vorhergehenden Ansprüche, **dadurch gekennzeichnet, dass** die Beschichtung (30) gerade Erzeugende bildet.

7. Eine Riemenscheibe nach Anspruch 6, **dadurch gekennzeichnet, dass** die Beschichtung (30) einen rechteckigen Querschnitt aufweist.

8. Eine Einheit nach einem der vorhergehenden Ansprüche, **dadurch gekennzeichnet, dass** die Feder (25) einer Biegungs/Kompressions-Spannung in Richtung der Übertragung des Drehmoments ausgesetzt ist, in der das Antriebselement (2) die Riemenscheibe (3) antreibt.

9. Eine Einheit nach Anspruch 8, **dadurch gekennzeichnet, dass** die Reibkopplung zwischen der Beschichtung (30) an dem äußeren Endabschnitt (37) der Feder (35) und der Riemenscheibe (3) einen Wert für das maximal übertragbare Drehmoment in eine Richtung der Übertragung des Drehmoment definiert, in der die Tendenz besteht, dass die Riemenscheibe (3) das Antriebselement (2) antreibt.

10. Eine Einheit nach einem der vorhergehenden Ansprüche, **dadurch gekennzeichnet, dass** diese eine Vielzahl von Spiralfedern (25) mit Beschränkung auf das Antriebeselement (2) und die Riemenscheibe (3) parallel zueinander aufweist.

11. Eine Einheit nach einem der vorhergehenden Ansprüche, **dadurch gekennzeichnet, dass** diese ein Stützelement (2), das an gepasst ist, an einem Rotationselement befestigt zu werden, und eine Dämpfungseinrichtung (4) für dynamische Vibrationen aufweist, die einen Trägheitsring (21) und einen Elastomer-Material-Ring (22) aufweist, der den Trägheitsring (21) mit dem Stützelement (2) verbindet.

12. Eine Einheit nach Anspruch 11, **dadurch gekennzeichnet, dass** das Antriebselement aus dem Stützelement (2) besteht.

13. Eine Einheit nach Anspruch 11, **dadurch gekennzeichnet, dass** das Antriebselement aus dem Trägheitsring (21) besteht.

## Revendications

1. Unité de poulie destinée à une transmission par courroie, en particulier pour un moteur à combustion interne, comprenant un élément d'entraînement (2) pouvant tourner autour de son axe, une poulie (3) coaxiale avec l'élément d'entraînement (2) et dotée d'une couronne dentée (11) conçue pour coopérer avec une courroie, et au moins un ressort hélicoïdal (25) disposé entre ledit élément d'entraînement (2) et ladite poulie (3) pour accoupler de façon rotative ladite poulie (3) audit élément d'entraînement (2), **caractérisée en ce que** ledit ressort (25) présente un revêtement de matériau polymère (30) au moins sur une première partie d'extrémité (36, 39) de celui-ci ancrée audit élément d'entraînement (2) et sur une deuxième partie d'extrémité (27) de celui-ci comprimée sur ladite poulie (3), ledit revêtement (30) dudit ressort (25) définissant avec ledit élément d'entraînement (2) et avec ladite poulie (3) des accouplements par friction respectifs.

2. Unité de poulie selon la revendication 1, **caractérisée en ce que** ledit revêtement (30) est constitué d'un matériau élastomère.

3. Unité de poulie selon la revendication 1 ou 2, **caractérisée en ce que** ledit revêtement (30) recouvre complètement ledit ressort (25).

4. Unité selon la revendication 3, **caractérisée en ce que** ledit revêtement (30) présente une épaisseur plus élevée au niveau de zones en contact avec ledit élément d'entraînement (2) et ladite poulie (3).

5. Unité de poulie selon l'une des revendications précédentes, **caractérisée en ce que** ledit revêtement (30) forme un anneau continu (36) qui recouvre de façon interne un tour intérieur dudit ressort (25) et est adapté sur ledit élément d'entraînement(2).

6. Unité de poulie selon l'une quelconque des revendications précédentes, **caractérisée en ce que** ledit revêtement (30) présente des génératrices droites.

7. Unité de poulie selon la revendication 6, **caractérisée en ce que** ledit revêtement (30) présente une section transversale rectangulaire.

8. Unité selon l'une quelconque des revendications précédentes, **caractérisée en ce que** ledit ressort (25) est soumis à une contrainte de flexion/compression dans la direction de transmission du couple dans laquelle l'élément d'entraînement (2) entraîne la poulie (3).

9. Unité selon la revendication 8, **caractérisée en ce que** ledit accouplement par friction entre le revêtement (30) sur ladite partie d'extrémité extérieure (37) dudit ressort (35) et ladite poulie (3) définit une valeur de couple transmissible maximum dans une direction de transmission du couple dans laquelle la poulie (3) tend à entraîner l'élément d'entraînement (2).

10. Unité selon l'une quelconque des revendications précédentes, **caractérisée par le fait qu'**elle comprend une pluralité de ressorts hélicoïdaux (25) comprimés sur ledit élément d'entraînement (2) et sur ladite poulie (3) parallèles les uns aux autres.

11. Unité selon l'une quelconque des revendications précédentes, **caractérisée par le fait qu'**elle comprend un élément de support (2) conçu pour être fixé à un élément rotatif, et un amortisseur de vibration dynamique (4) comprenant une bague d'inertie (21) et une bague en matériau élastomère (22) qui relie ladite bague d'inertie (21) audit élément de support (2).

12. Unité selon la revendication 11, **caractérisée en ce que** ledit élément d'entraînement est constitué dudit élément de support (2).

13. Unité selon la revendication 11, **caractérisée en ce que** ledit élément d'entraînement est constitué de ladite bague d'inertie (21).
